Europäisches Patentamt

(19) European Patent Office

Office européen des brevets

(11) Publication number: 0 135 356

A2

(12) # EUROPEAN PATENT APPLICATION

(21) Application number: 84305472.7

(22) Date of filing: 10.08.84

(51) Int. Cl.⁴: B 02 C 18/14
B 07 B 9/00

(30) Priority: 11.08.83 GB 8321685

(43) Date of publication of application:
27.03.85 Bulletin 85/13

(84) Designated Contracting States:
AT BE CH DE FR GB IT LI LU NL SE

(71) Applicant: BICC Public Limited Company
21, Bloomsbury Street
London, WC1B 3QN(GB)

(72) Inventor: Nieora, Marian Karol
3 Kirn Road
London W.13(GB)

(72) Inventor: Price, George Edwin
10 Fern Close
Billericay Essex, CM12 0QE(GB)

(74) Representative: Poole, Michael John et al,
BICC plc Patents Department 38 Ariel Way Wood Lane
London W12 7DX(GB)

(54) Preparation of granular material.

(57) A method of preparing granular material comprises comminuting sheet material by means of a granulator of the kind comprising a rotor with at least one blade co-operating with at least one fixed blade to comminute the sheet material repeatedly until the particles are small enough to pass through a screen bounding the working surface. The sheet material is fed to the granulator at a rate such that it initially cuts from the leading end of the sheet strips with an average width $W$ (being the larger of the thickness of the sheet and the distance it advances between consecutive cuts). The screen has openings larger in diameter than $W$. The particles which pass through the screen are classified to remove granules exceeding a predetermined length greater an $W$.

EP 0 135 356 A2

## PREPARATION OF GRANULAR MATERIAL 0135356

This invention relates to a method for the preparation of granular materials. More specifically, the invention is concerned with the preparation of granules from sheet materials. The invention includes granular materials, especially copper and other metals, produced by the method and the use of such granular metals as raw material for continuous friction-actuated extrusion.

An important way of making granular material is to comminute sheet material by means of a granulator of the kind comprising a rotor with at least one blade co- operating with at least one fixed blade to comminute the material repeatedly until the resulting granules are small enough to pass through a screen bounding the working zone.

It will be apparent that material will initially be cut from the sheet in long narrow strips and that many further cuts will be required to reduce the strips to substantially isotropic granules.

Hitherto it has been assumed that the openings of the screen must be smaller than the cross-section of the initial strip to ensure that the granules will be unable to escape from the working zone until a reasonably isotropic state is achieved, with the inevitable consequence that a high proportion of very small granules is produced and unnecessary energy is expended. Indeed, our experiments have confirmed that if the screen opening is bigger than the cross-section of the initial strips, a small but not negligible proportion of granules with lengths significantly in excess of the screen openings will escape because they happen to approach a screen opening end-on, and, if allowed to remain, these elongate granules may cause major difficulties in the use or subsequent processing of the granules.

However, in accordance with the invention a method of preparing granular material comprises comminuting sheet material by means of a granulator of the kind comprising a rotor with at least one blade co-operating with at least one fixed blade to comminute the sheet material repeatedly until the particles are small enough to pass through a screen bounding the working surface, the sheet material being fed to the granulator at a rate such that it initially cuts from the leading end of the sheet strips with an average width $W$ (being the larger of the thickness of the sheet and the distance it advances between consecutive cuts) and the screen having openings larger in diameter than $W$ and then classifying the particles which have passed through the screen to remove granules exceeding a predetermined length greater than $W$.

Preferably the openings in the screen are circular and have a diameter not greater than $3W$.

A preferred classifying means is described and claimed in another application filed on the same day as this application claiming priority from British application 8321684.

The invention will now be further described by way of example.

A granulator of the same form as the "development granulator" described by way of example in our European Patent Application 83302670.1 (publication No. 94254) was fed with copper cathode averaging 5 mm thick at an instantaneous speed such that the advance between consecutive cuts also averaged 5 mm. The screen bounding the working area of the granulator had circular openings 10 mm in diameter.

The material emerging from the granulator was freed of fines by two successive 850 um B.S. mesh size sieves, and then freed of particles larger than 10 mm by the use of the method and apparatus described in the application referred to above as being filed on the same day as this application.

About 1% of the granulated material was rejected as fines and 1.5% as recyclable elongate particles. In comparision, if screen size was reduced to 6 mm, substantially no elongate particles were found in the output but the proportion of fines was around 2.0%. Commensurate with the reduced production of fines, the energy consumption per tonne of useful granules produced was reduced to 85 MJ/t compared with 110 MJ/t when the 6 mm screen was used, and the maximum throughput rate of the machine was increased from 550 to 850 kg/h.

0135356

CLAIMS

1.      A method of preparing granular material comprising comminuting sheet material by means of a granulator of the kind comprising a rotor with at least one blade co-operating with at least one fixed blade to comminute the sheet material repeatedly until the particles are small enough to pass through a screen bounding the working surface, the sheet material being fed to the granulator at a rate such that it initially cuts from the leading end of the sheet strips with an average width $\underline{W}$ (being the larger of the thickness of the sheet and the distance it advances between consecutive cuts) and the screen having openings larger in diameter than $\underline{W}$ and then classifying the particles which have passed through the screen to remove granules exceeding a predetermined length greater than $\underline{W}$.

2.      A method as claimed in Claim 1, wherein the openings in the screen are no more than $3\underline{W}$.

3.      A method as claimed in Claim 1 or Claim 2, wherein granules exceeding the said predetermined length are removed by means of apparatus claimed in the application referred to above as being filed on the same day as this application.

4.      Granular material prepared by the method claimed in any one of the preceding claims.

5.      The use as raw material for continuous friction-actuated extrusion of granular material prepared by the method claimed in any one of Claims 1 to 3.